# EUROPEAN PATENT APPLICATION

(11) **EP 2 958 361 A1**
(43) Date of publication of application: **23.12.2015**
(21) Application number: 14172963.2
(22) Date of filing: 18.06.2014
(51) Int. Cl.: H04W 24/08, H04L 29/06, H04W 12/02

(54) **A key server utilized in analyzing signaling messages of a wireless network**

(71) Applicant: EXFO Oy, 90570 Oulu (FI)
(72) Inventor: Ainali, Timo, FI-90570 Oulu (FI); Ikäheimo, Jorma, FI-90570 Oulu (FI)
(74) Representative: Berggren Oy Ab

(57) **Abstract**

The invention relates to a key server (61) according to the invention that monitors and captures exchanges of the cipher keys and temporary identity mappings that happen in the devices under test in a wireless communications network. The invention relates also to a measurement arrangement and measurement method where the key server (61) is utilized. At the same time a traffic analyzer (51) captures ciphered signaling messages from the interfaces of the network devices that are under test. The traffic analyzer does not try to decipher captured signaling messages on the fly. The traffic analyzer (51) deciphers the captured signaling messages as an off-line process as post processing.

## Description

### Field of the invention

The invention relates to a key server connected to a wireless network. The key server records temporal subscriber identities and utilized ciphering keys that are utilized in a traffic analyzer for post processing signaling messages transmitted in the wireless communications network. The invention also relates to a method where the key server data is utilized in a traffic analyzer for accomplishing a post processing of the recorded signaling messages.

### Background of the invention

In wireless networks it sometimes happens that a user has problems either with phone call or data connections. For solving the problem the user traffic between a serving base station of the mobile device and elements of the core network has to be analyzed. In the analyzing work are utilized all kinds of signaling messages that have been transmitted in the wireless network.

However, in wireless telecommunication networks ciphering of signals and temporal subscriber identities like Globally Unique Temporary ID (GUTI) of LTE (Long Term Evolution) may be utilized to protect confidentiality and identity of the mobile network subscribers. Due to the utilized ciphering it is impossible to analyze calls and sessions in a wireless telecommunication network by monitoring network interface(s) if the network is protected.

One possible way of solving the above-mentioned problem is to capture in real time ciphering keys from AAA key exchange signaling (Authentication, Authorization and Accounting) and to follow at the same time all utilized temporary subscriber identities and map these to real subscriber identities. This kind of operation requires that monitoring of the interfaces under test is continuous.

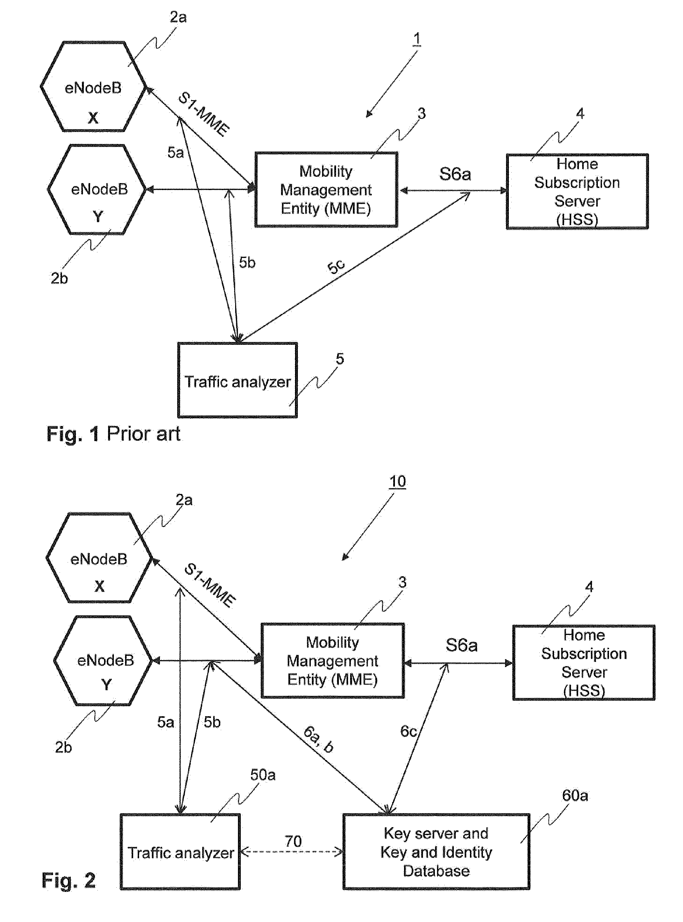

An example of this kind of a situation is shown in **Figure 1****.** In the depicted exemplary measurement configuration 1 in an LTE communications network a traffic analyzer 5 captures (references 5a and 5b) signaling messages that have been transmitted through an S1-MME interface. The captured signaling messages include temporal subscriber identities and ciphered Non Access Stratum (NAS) signaling messages. The interface exists between the Mobility Management Entity (MME) and eNodeB **"X"** or eNodeB **"Y"** (references 2a and 2b). At the same time the traffic analyzer 5 has to capture (reference 5c) subscriber true identity information and utilized ciphering keys via an interface S6a that exists between Mobility Management Entity 3 and Home Subscription Server (HSS) 4 and temporary subscriber identity information from S1-MME interface and map temporary identities to subscriber true identities. In practice this means that the traffic analyzer 5 has to record the whole signaling traffic; i.e. the traffic between any two parties that are connected to elements under test in the wireless network. This means that a huge amount of signaling data has to be recorded already in a short time period after the measurement has been started. In the best case the traffic analyzer 5 known in the art has a capability to save the captured signaling data for about three days. In some cases the attainable measurement time of the prior traffic analyzer may be too short to find the network entity that causes problems in the wireless network.

In a case where continuous key capture or subscriber true and temporary identity follow up is not accessible, phone call and session analysis is not possible due to inability to decipher the captured signaling traffic in the utilized traffic analyzer. For example post processing analysis of the calls and sessions captured from the S1 interface of LTE (Long Term Evolution) is in most cases impossible.

The post processing analysis is possible only in cases where the true identity of the subscriber appears in signaling messages during the analysis session. That is the case when a mobile station has been rebooted, for example. In that case the traffic analyzer 5 can get the utilized ciphering keys from the AAA interface.

### Summary of Some Examples of the Invention

An object of the invention is to provide a new, secure and cost effective post processing arrangement and post processing method for solving subscriber problems that has been detected in a wireless communications network.

The objects of the invention are achieved by a method and a network arrangement, where a special key server captures and time stamps, temporary and true subscriber identities and corresponding ciphering keys comprising key tuple key access security management entity (K-ASME), authentication token (AUTN), expected response (XRES) and random number (RAND) as specified in 3GPP TS 33.401 and saves the formed identity and key records (71) to a key and identity database according to the invention. At the same time a traffic analyzer records signaling messages to its database. In the post processing phase the traffic analyzer imports the time stamped temporary and true subscriber identities and ciphering keys for deciphering the recorded signaling messages.

An advantage of the invention is that the ciphering keys, temporal and true subscriber identity mappings are known during the post processing phase. This makes it possible that the post processing of the network element under test can be performed without problems also in networks that utilize ciphering and temporal subscriber identities.

Another advantage of the invention is that the recording time of the traffic analyzer can be extended to tens of days because during the signaling message capturing only the recorded signaling messages are saved to the memory of the traffic analyzer.

Another advantage of the invention is that the ciphering keys will not be lost during a service break of the traffic analyzer.

A further advantage of the invention is that it provides a secure and automatic access to ciphering keys, temporary and real subscriber identities for accomplishing a post processing.

A further advantage of the invention is that the processing in the key server during measurement is easier because what is required is only to find the utilized ciphering keys, temporary and true subscriber identities and to save them to a key and identity database.

A further advantage of the invention is that the overall system costs are lower because there is no need to provide online call and session analysis for all the utilized network interfaces during the measurement time.

A further advantage of the invention is that a connection is not needed between the traffic analyzer and the key server when the traffic analyzer captures signaling messages. This makes it possible to analyze successfully also remote locations more easily.

A further advantage of the invention is that a good analyzing performance is achieved during the post processing phase by utilizing locally accessible data of the ciphering keys, temporary and true subscriber identities of a time period that is defined to be analyzed in the traffic analyzer. Therefore, the traffic analyzer does not need to make queries over the serving network during the post processing phase.

Yet another advantage of the invention is that after post processing analysis the locally captured cipher keys, real and temporary subscriber identities can be reported back to the key server database for enhancing the coverage of the possible other analyses.

The method according to the invention for resolving problems of a user connection of a wireless communications network is characterised in that during a measurement period from the interfaces of the wireless communications network:
- a traffic analyzer captures ciphered signaling messages from interfaces of the devices under test,
- a distinct key server captures and time stamps ciphering keys, temporary subscriber identities, true subscriber identities and terminal identities from interfaces of a mobility management entity, and
- by utilizing the captured information, the traffic analyzer resolves the problems of the user connection in post processing.

The key server according to the invention is characterised in that during a measurement period the processor unit and the memory unit are configured at least to capture and time stamp ciphering keys, temporary subscriber identities, true subscriber identities, and actual terminal identities from the S1-MME and S6a interfaces of an LTE network.

The measurement arrangement according to the invention for resolving by post processing connection problems of a user of a wireless communications network, is characterised in that the measurement arrangement comprises a key server configured to capture and time stamp ciphering keys, temporary subscriber identities, true subscriber identities (IMSI) and actual terminal identities (IMEI) from utilized interfaces of the wireless communications network during a measurement period.

The idea of the invention is basically as follows: A distinct key server according to the invention monitors continuously exchanges of the ciphering keys and temporary identity to true identity mappings that happen in the devices under test of the wireless communications network. The key server saves the captured and time stamped ciphering keys, temporary subscriber identities, true subscriber identities, and terminal identities to a key and identity database according to the invention. From the key and identity database the ciphering keys, temporary subscriber identities, true subscriber identities, and terminal identities can afterwards be extracted to a traffic analyzer in an off-line post processing phase.

At the same time the traffic analyzer captures and saves to its memory ciphered signaling messages from the interfaces of the network devices that are under test. In the measurement system according to the invention the traffic analyzer does not try to decipher the signaling messages during capturing of the signaling messages.

In the beginning of the post processing phase the traffic analyzer automatically discovers the key server, and imports time stamped ciphering keys and identities from the key and identity database.

After post processing the traffic analyzer synchronizes the locally found subscriber identities and keys automatically or manually to the key and identity database of the key server.

Further scope of applicability of the present invention will become apparent from the detailed description given hereafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief description of the drawings

The invention is described in detail below. Reference is made to the accompanying drawings in which
- Fig. 1: shows a schematical representation of a measurement arrangement of a wireless communications network utilized in prior art;
- Fig. 2: shows an embodiment of the measurement arrangement according to the invention where the key server and traffic analyzer are separately connected to interfaces of the devices under test in an LTE network;
- Fig. 3: shows as an example a measurement post processing arrangement according to the invention,
- Fig. 4: shows as an exemplary a flow chart the main steps of the process that are executed in the key server during a measurement period;
- Fig. 5: shows as an exemplary flow chart the main steps of a method needed for analysing signaling messages as a post processing process; and
- Fig. 6: shows as an example the components utilized in the key server according to the invention.

### Detailed description

In the following description, the considered embodiments are merely exemplary, and one skilled in the art may find other ways to implement the invention. Although the specification may refer to "an", "one" or "some" embodiment(s) in several locations, this does not necessarily mean that each such reference is made to the same embodiment(s), or that the feature only applies to a single embodiment or all embodiments. Single features of different embodiments may also be combined to provide other embodiments.

**Figure 1** was discussed in conjunction with the description of the prior art.

**Figure 2** depicts an exemplary measurement configuration 10 according to the invention that makes it possible to utilize a post processing phase in analyzing functioning of the network components under test (references 3, 2a, or 2b) of an LTE network, for example.

In the exemplary measurement configuration 10 according to the invention a traffic analyzer configuration 50a needs only to capture (references 5a and 5b) the ciphered signaling messages that have been transmitted through an S1-MME interface which exists between the Mobility Management Entity 3 and eNodeB "X" (reference 2a) or eNodeB "Y" (reference 2b).

At the same time the key server configuration 60a according to the invention captures and time stamps (reference 6a, 6b, 6c) globally unique temporary identity (GUTI) and true subscriber identity (IMSI) information and actual terminal identity (IMEI) and utilized ciphering keys from S1-MME and S6a interfaces that exists between Mobility Management Entity 3 and Home Subscription Server 4. In practice in the measurement configuration 10 the key server configuration 60a needs to store in most cases only the changing ciphering keys and temporary subscriber identities that are utilized in signaling traffic between the network elements 2a, 2b, and 3 under test.

The measurement configuration 10 according to the invention makes it possible that the amount of data to be captured and stored is smaller both in the tarffic analyzer configuration 50a and key server configuration 60a compared to data needed to be stored in a measurement configuration known in the art (Fig. 1) during the same measurement period.

In the measurement configuration 10 according to the invention the traffic analyzer configuration 50 has a capability to capture and save ciphered signaling data for a lot longer period than in the prior art case because of being able to perform problem solving by storing signaling messages from subset of network interfaces. Also the resources of the key server configuration 60a can be focused on capturing and saving ciphering keys and temporary and true subscriber identities. Therefore the measurement configuration 10 according to the invention enables a long measurement time and that makes it possible to find out with a high probability also such network errors that happen only now and then in the network elements under test.

In the beginning of the off-line post processing phase the traffic analyzer configuration 50a establishes a secure connection 70 to the key server configuration 60a. The traffic analyzer configuration 50a imports time stamped ciphering keys, and temporary subscriber identities from the key and identity database of the key server configuration 60a. If needed, the traffic analyzer configuration 50a may also import true subscriber identities and actual terminal identities (IMEI). The time period is chosen so that it is known to include at least one connection problem of a particular subscriber device or network element of the LTE network.

The traffic analyzer configuration 50a deciphers signaling messages directed to or from the problematic subscriber device or network element. The deciphered signaling messages can be used to find out the reason that causes the detected subscriber problem.

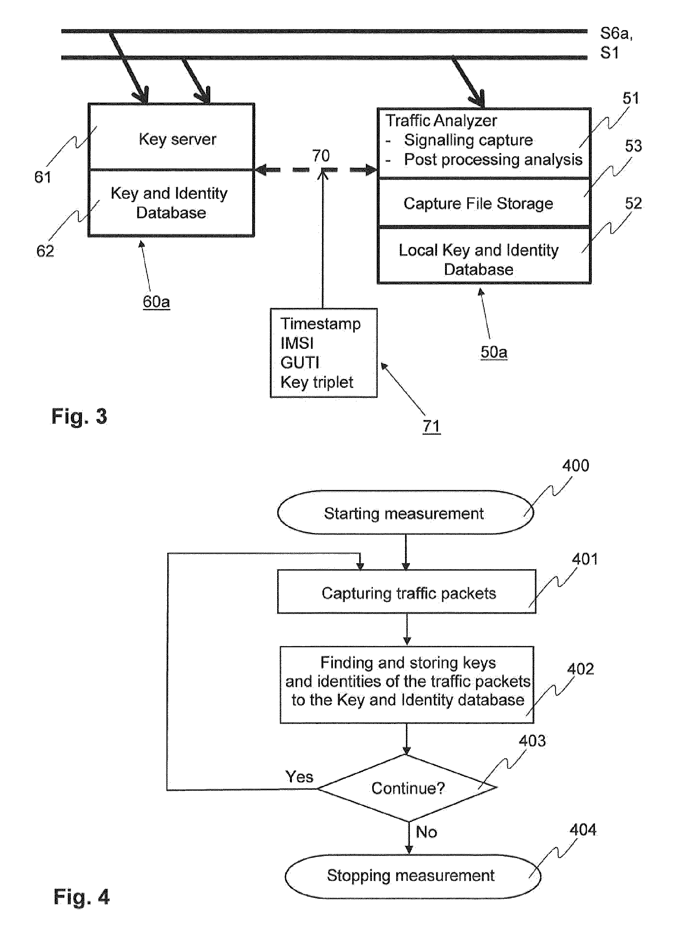

**Figure 3** shows as an example what functions the measurement apparatuses according to the invention advantageously comprise that enable the post processing of signaling messages also in situations where ciphering keys and temporary subscriber identities are utilized in the LTE network.

The key server configuration 60a according to the invention may comprise a distinct key server or key server function 61. During a measurement period, the key server 61 has advantageously fixed connections at least to the S1 and S6a interfaces of the network elements under test.

The key server configuration 60a advantageously comprises also key and identity database 62 which may be integrated to the key server 61. During a measurement period the key server 61 saves the ciphering keys, temporary subscriber identities and all their time stamps to the key and identity database 62.

In one advantageous embodiment of the invention the key server 61 and key and identity database 62 may be distinct devices that have fixed connection between each other at least during a measurement period.

In one advantageous embodiment the key server configuration 60a according to the invention and its sub-functions may be integrated to a network element of the communications network under test.

The traffic analyzer configuration 50a according to the invention may comprise a distinct traffic analyzer 51, capture file storage 53 and a local key and identity database 52. The traffic analyzer 51 comprises advantageously signaling capture and post processing functions or means. During a measurement period, the traffic analyzer 51 has advantageously fixed connections at least to the S1 interfaces of the network elements under test. During the measurement period the traffic analyzer 51 saves ciphered signaling messages as such to its capture file storage 53.

When an off-line post processing phase begins, the traffic analyzer 51 automatically establishes a two-way secure connection 70 to the key server configuration 60a and there to the key and identity database 62. The key server 61 and traffic analyzer 51 advantageously encrypt all transmissions between each other by utilizing public key infrastructure (PKI).

By the established connection the traffic analyzer 51 imports to the local key and identity database 52 advantageously ciphering keys and temporary subscriber identities that are utilized in the measurement time of interest in the devices under test. If needed, also true subscriber identities (IMSI) and terminal identities (IMEI) may be imported. The imported data 71 may also comprise for example time stamps of temporary subscriber identities (GUTI) and ciphering keys telling validity time for the temporary identities and ciphering keys. Ciphering keys and temporary identities are valid only after the capture time until replaced by new ciphering keys and identities.

Due to the importance of correct time in the key server 61 and the traffic analyzer 51, time is synchronized in both of them by utilizing well known means for time synchronization, for instance GPS time synchronization.

In the post processing phase the traffic analyzer 51 deciphers imported ciphered signaling messages by utilizing the now known ciphering keys.

**Figure 4** shows as an exemplary flow chart the main steps of the process that is executed in the key server configuration 60a or the key server 61 according to the invention during a measurement period. In the following description only functions of the key server 61 are depicted.

The measurement starts in phase 400. The key server 61 is connected to interfaces of the devices under test (references 6a, 6b, and 6c). Some examples of the possible utilized interfaces are S1 and S6a interfaces of the network elements of an LTE network. In the example of Figure 2 the utilized interfaces are the S6a interface between MME 3 and HSS 4 and advantageously also the S1-MME interfaces between MME 3 and two exemplary eNodeBs 2a and 2b. In the measurement configuration 10 according to the invention the key server 61 needs advantageously to be connected only to those device interfaces where connection problems have been detected.

When connections to the network element interfaces are ready, the key server 61 starts to capture and time stamp ciphering keys and temporary and true subscriber identities in phase 401. The key server 61 does not itself try to use the ciphering keys and subscriber identities for analyzing work.

In phase 402 the key server 61 saves captured and time stamped ciphering keys and temporary and true subscriber identities to the key and identity database 62 as such.

From time to time in phase 403 the key server 61 checks if the measurement should be continued. If the measurement should be continued (alternative Yes), in that case the process returns to phase 401. The process steps 401 and 402 are repeated and new ciphering keys and temporary and true subscriber identities of new signaling messages will be captured.

If the decision in phase 403 is "No", the measurement should be stopped either because the measurement time is over or for some other reason. In that case, the key server 61 stops capturing the ciphering keys and subscriber identities in step 404.

A technical effect of the measurement configuration 10 according to the invention is that the key server 61 needs not to have processing and storage capabilities for saving signalling messages for future analysis.

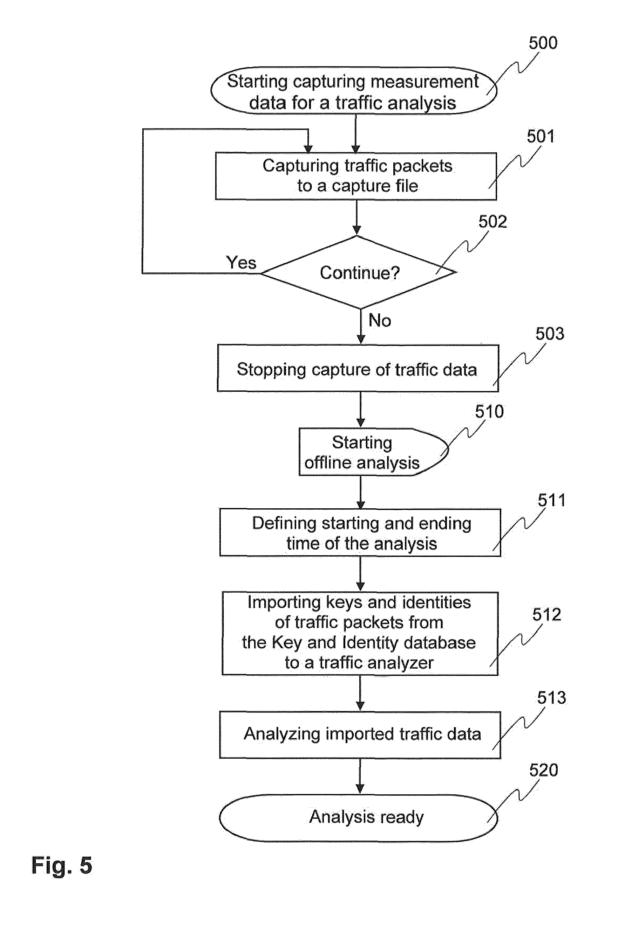

Figure 5 shows as an exemplary flow chart the main steps of the process that is executed in the traffic analyzer configuration 50a or traffic analyzer 51 according to the invention during a signaling message capture period and in a latter off-line post processing period. In the following description only functions of the traffic analyzer 51 are depicted.

The measurement starts in phase 500. The traffic analyzer 51 is connected to interfaces of the devices under test (Fig. 2, references 5a and 5b). Some examples of possible utilized interfaces are the S1 and S6a interfaces of the network elements of an LTE network. In the example of Figure 2 the interfaces are S1-MME interfaces between MME 3 and two exemplary eNodeBs 2a and 2b.

When connections to the network element interfaces under test are ready, the traffic analyzer 51 starts to capture ciphered signaling messages in phase 501. The traffic analyzer 51 does not try to decipher the captured signaling messages. The tarffic analyzer 51 saves the captured ciphered signaling messages to its local capture file storage 53. To each captured signaling message the traffic analyzer 51 advantageously adds a time stamp.

The traffic analyzer 51 checks from time to time in phase 502 if the capturing of signaling messages should be continued. If the measurement should be continued (alternative Yes), in that case the process returns to phase 501. The process steps 501 and 502 are repeated and new ciphered signaling messages will be captured.

If the decision in phase 502 is "No", the measurement should be stopped either because the measurement time is over or for some other reason. In this case the traffic analyzer 51 stops capturing the signaling messages in step 503.

A technical effect of the measurement configuration 10 according to the invention is that also the traffic analyzer 51 does not need to decipher all captured signaling messages and save on the fly them for future analysis. The unused resources of the traffic analyzer 51 can be utilized to prolong the possible capturing time from a couple of days to tens of days.

After step 503 the traffic analyzer 51 may be disconnected from the network elements under test. The traffic analyzer 51 can now be utilized in the post processing.

The off-line post processing is started in phase 510. In that phase the traffic analyzer 51 is connected to the key server 61 advantageously via a secure two-way connection 71. The connection may be a wired fixed connection or a wireless connection. In either case the parties utilize advantageously public key infrastructure for securing the data transfer between each other and preventing an illegal access to the captured user information.

In phase 511 a starting and ending time of the analysis period is defined in the traffic analyzer 61.

In phase 512 captured ciphering keys and temporary subscriber identities for the defined analysis period are imported from the key and identity database 62 to the local key and identity database 52 of the traffic analyzer 51. Advantageously also the true subscriber identities (IMSI) and terminal identities (IMEI) are exported from key and identity database 62 to the local identity database 52. Time stamps included to key records (71) are used to determine the records to be exported.

In phase 513 the traffic analyzer 51 deciphers signaling messages captured during the measurement period by utilizing the imported ciphering keys. Also the temporary subscriber identities are converted into a true subscriber identity by the imported temporary and true subscriber identity data. The deciphered signaling messages of a problematic subscriber connection may now be saved in the local database and utilized in resolving the problems of the subscriber connection.

The post processing ends in phase 520 when all captured and deciphered signaling messages of the problematic subscriber connection have been utilized in the problem analysis. After the analysis the results are advantageously saved in the local key and identity database 52.

Any of the steps described or illustrated in Figures 4 and 5 may be implemented using executable instructions in a general-purpose or special-purpose processor and stored on a computer-readable storage medium (e.g., disk, memory, or the like) to be executed by such a processor. References to computer-readable storage medium and computer should be understood to encompass specialized circuits such as field-programmable gate arrays, application-specific integrated circuits (ASICs), USB flash drives, signal processing devices, and other devices.

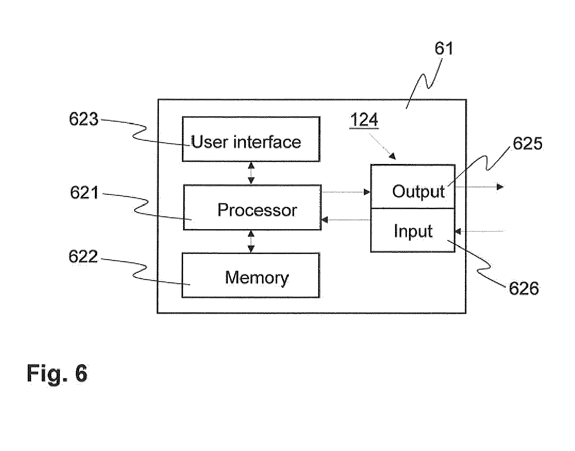

**Figure 6** shows the operational main parts of the key server 61 according to the invention that are utilized in the implementation of the measurement arrangement according to the invention. The key server 61 comprises a processor or processor means 621, which advantageously comprise an arithmetic logic unit, a number of different registers and control circuits. A data storing arrangement 622, such as memory unit or memory means, whereon computer-readable information, programs or user data can be stored, has been connected to the processor means 621. The memory means 622 typically contain memory units which allow both reading and writing functions (Random Access Memory, RAM), and memory units containing non-volatile memory, from which data can only be read (Read Only Memory, ROM).

The key server 61 also comprises an interface element 624 which comprises an input or input means 626 for receiving measurement data from the interfaces of the devices under test. The signaling message measurement data received with the input means 626 is advantageously transferred to be processed by the processor means 621 of the key server 61.

The interface element 624 of the key server 61 also comprises an output or output means 625 with which data is transferred from the processor means of the key server 60 via a data transfer connection to the database key and identity database device and to the traffic analyzer 50.

The key server 61 advantageously also comprises a user interface 623 which comprises means for receiving data and/or control commands from the user of the key server 61. The user interface 623 can for example comprise a keyboard and a touch screen.

The processor means 621, the memory means 622, the interface element 624, and the user interface 623 are electrically connected together to systematically execute received and/or stored data or information in accordance with predetermined and substantially pre-programmed operational sequences. Such operational sequences also include the operational sequences described in connection with Figure 4, which implement the functions of the key server according to the invention.

The detailed implementation of the logical units of the server in Figure 6 is prior art to someone skilled in the art.

Some advantageous embodiments according to the invention were described above. The invention is not limited to the embodiments described. The inventive idea can be applied in numerous ways within the scope defined by the claims attached hereto.

## Claims

1. A method for resolving problems of a subscriber connection of a wireless communications network, **characterised in that** during a measurement period (400-404, 500-503) from interfaces of the wireless communications network
- a traffic analyzer (51) captures ciphered signaling messages from interfaces of the devices under test
- a distinct key server (61) captures (400-404) and time stamps ciphering keys, temporary subscriber identities, true subscriber identities (IMSI) and actual terminal identities (IMEI) from the interfaces of a mobility management entity (3), and
- by utilizing the captured information, the traffic analyzer (51) resolves the problems of the user connection in post processing (510-520).

2. The method according to claim 1, **characterised in that** during the post processing (510-520):
- the traffic analyzer (51)
- establishes (510) a connection (70) to the key server (61)
- defines (511) a starting and ending time of a period to be analyzed
- imports (512) from a key and identity database (62) of the key server (61) time stamped ciphering keys and temporary subscriber identities (71) for the defined time period
- deciphers (513) ciphered signaling messages of the subscriber for a problem analysis.

3. The method according to claim 2, **characterised in that** during the post processing (510-520) the tarffic analyzer (51) imports also the true subscriber identities (IMSI) and terminal identities (IMEI).

4. The method according to claims 1 to 3, **characterised in that** ciphering keys comprises K-ASME, AUTN, XRES and RAND.

5. A key server (61) comprising
- a processor unit (623)
- a memory unit (622)
- input and output means (625, 626), and
- a user interface (623),
**characterised in that** during a measurement period (400-404) the processor unit (623) and the memory unit (622) are configured at least to capture and time stamp ciphering keys, temporary subscriber identities, true subscriber identities (IMSI), and actual terminal identities (IMEI) from the S1-MME and S6a interfaces of an LTE network.

6. The key server (61) according to claim 5, **characterised in that** during post processing, it is further configured to
- receive (510) a connection request from a traffic analyzer (51)
- establish (510) the requested connection (70) to traffic analyzer (51)
- export (512) from a key and identity database (62) of the key server (61) time stamped ciphering keys and temporary subscriber identities (71) for a defined time period to the traffic analyzer (51).

7. The key server (61) according to claim 7, **characterised in that** during post processing (510-520) it is configured to export to the tarffic analyzer (51) also the true subscriber identities (IMSI) and terminal identities (IMEI).

8. A measurement arrangement (10) for resolving by post processing connection problems of a subscriber of a wireless communications network, the measurement arrangement (10) comprising
- a telecommunications network
- a home subscription server (4)
- a mobility management entity (3)
- base stations (2a, 2b), and
- a traffic analyzer (51, 50a),
**characterised in that** the measurement arrangement (10) further comprises a key server (61, 60a) configured to capture and time stamp ciphering keys, temporary subscriber identities, true subscriber identities (IMSI), and the actual terminal identities (IMEI) from utilized interfaces of the wireless communications network during a measurement period (400-404).

9. The measurement arrangement (10) according to claim 8, **characterised in that** the ciphering keys, the temporary subscriber identities, the true subscriber identities (IMSI) and the actual terminal identities (IMEI) are captured from an S6a and S1-MME interfaces of the mobility management entity (3) or of a home subscription server (4).

10. The measurement arrangement (10) according to claim 8, **characterised in that** during a measurement period (500-503) the traffic analyzer (51, 50a) is configured to capture ciphered signaling messages from the interfaces of the devices under test (3, 2a, 2b).

11. The measurement arrangement (10) according to claim 10, **characterised in that** the ciphered signaling messages are captured from the S1-MME interfaces of the mobility management entity (3) or the base stations (2a, 2b) of the wireless network.

12. The measurement arrangement (10) according to claim 8, **characterised in that** during post processing, the traffic analyzer (51, 50a) is configured to
- establish (510) a connection (70) to the key server (61, 60a)
- define (511) a starting and ending time of an analyzing period
- import (512) from a key and identity database (62) of the key server (61, 60a) time stamped ciphering keys and temporary subscriber identities (71) for the defined time period
- decipher (513) ciphered signaling messages of the user for a problem analysis.

13. The measurement arrangement (10) according to claim 12, **characterised in that** the traffic analyzer (51, 50a) is configured to import to the traffic analyzer (51) also the true subscriber identities (IMSI) and actual terminal identities (IMEI).
